(19) **Europäisches Patentamt**
**European Patent Office**
**Office européen des brevets**

(11) **EP 1 791 712 B1**

(12) **FASCICULE DE BREVET EUROPEEN**

(45) Date de publication et mention
de la délivrance du brevet:
**15.04.2009 Bulletin 2009/16**

(51) Int Cl.:
***B60K 6/20*** *(2007.10)*   ***B60K 6/365*** *(2007.10)*
***B60K 6/40*** *(2007.10)*

(21) Numéro de dépôt: **05800244.5**

(22) Date de dépôt: **20.09.2005**

(86) Numéro de dépôt international:
**PCT/FR2005/050764**

(87) Numéro de publication internationale:
**WO 2006/032818 (30.03.2006 Gazette 2006/13)**

(54) **PROCEDE DE REGULATION POUR UN DISPOSITIF DE TRANSMISSION ENTRE UN ARBRE D'UN MOTEUR THERMIQUE ET UN ARBRE DE ROUES D'UN VEHICULE**

STEUERUNGSVERFAHREN FÜR EINE ÜBERTRAGUNGSVORRICHTUNG ZWISCHEN EINER WÄRMEKRAFTMASCHINE UND EINER ACHSWELLE EINES FAHRZEUGS

CONTROL METHOD FOR A TRANSMISSION DEVICE BETWEEN A HEAT ENGINE SHAFT AND AN AXLE SHAFT OF A VEHICLE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **24.09.2004 FR 0452158**

(43) Date de publication de la demande:
**06.06.2007 Bulletin 2007/23**

(73) Titulaire: **PEUGEOT CITROËN AUTOMOBILES S.A.**
**78140 Vélizy Villacoublay (FR)**

(72) Inventeurs:
• **LAEUFFER, Jacques**
 **F-75007 PARIS (FR)**
• **BESNARD, Sébastien**
 **F-92330 Sceaux (FR)**

(56) Documents cités:
**EP-A- 1 097 830**     **EP-A- 1 174 304**
**FR-A- 2 783 763**     **FR-A- 2 832 357**
**FR-A- 2 847 858**     **FR-A- 2 851 515**
**US-A1- 2001 017 227**

**Description**

La présente invention concerne un procédé de régulation pour un dispositif de transmission de puissance entre un arbre d'un moteur thermique et un arbre de roues d'un véhicule. La présente invention a pour but de rendre plus stable et plus précis un tel procédé. La présente invention trouve une application particulièrement avantageuse dans le domaine des véhicules automobiles, mais elle pourrait aussi être mise en oeuvre dans des trains, des bateaux ou des motocyclettes.

On connaît des dispositifs de transmission de puissance entre un arbre d'un moteur et un arbre de roue utilisés dans des véhicules hybrides. De tels dispositifs sont décrits dans la demande FR-A-2832357. Ces dispositifs de transmission comportent généralement un moteur thermique, et une paire de machines électriques. L'arbre du moteur, l'arbre des roues et des arbres des machines sont reliés entre eux par l'intermédiaire d'un ensemble mécanique. Les deux machines sont reliées entre elles par l'intermédiaire d'un dispositif de liaison électrique comportant notamment un bus électrique. Ces machines se comportent en moteur ou en générateur en fonction des énergies électriques et mécaniques qu'elles reçoivent respectivement sur leur arbre et sur leurs bornes.

Une puissance fournie par le moteur thermique peut être soit transmise directement aux roues par l'intermédiaire d'une chaîne mécanique comportant notamment l'ensemble mécanique, soit dérivée dans une chaîne électrique comportant les machines électriques et le dispositif de liaison. La puissance dérivée dans la chaîne électrique est transmise à l'arbre des roues de manière à ajuster le couple appliqué sur cet arbre, et à adapter le couple et le régime du moteur thermique à un point de fonctionnement où sa consommation est minimale. Le fait d'ajuster le couple appliqué sur l'arbre des roues procure un grand confort de conduite, tandis que le fait d'adapter le couple et le régime du moteur permet de réaliser des économies d'énergie.

Dans le cas où un système de stockage de forte capacité est relié au bus, les deux machines possèdent de nombreux de degrés de liberté. En effet, ces machines peuvent se comporter par exemple toutes les deux en moteur dans une phase d'accélération, ou toutes les deux en générateur dans des phases de récupération d'énergie.

Dans le cas où aucun système de stockage de forte capacité n'est relié au bus, toute l'énergie fournie par une des machines dans la chaîne électrique est instantanément consommée par l'autre machine. La somme algébrique des puissances mécaniques des deux machines électriques est donc quasiment nulle. En effet, cette puissance correspond simplement aux pertes des machines électriques et à une puissance destinée à un réseau de bord du véhicule. Pour assurer un équilibre entre les puissances fournies par les deux machines électriques, un condensateur est relié à des connexions du bus électrique. Ce condensateur est un système de stockage de faible capacité comparativement au système de stockage de forte capacité précédemment cité.

On connaît un procédé de régulation électrique pour des dispositifs de transmission ne comportant pas de système de stockage de forte capacité. Ce procédé décrit dans la demande EP-1174304 est basé sur une régulation d'une tension observable aux bornes du condensateur. En effet, le fait que le bilan des puissances électriques dans la chaîne électrique doive être nulle se traduit par une tension constante aux bornes du condensateur.

Ainsi, dans ce système de régulation électrique, on commande un premier onduleur associé à une première machine, de manière à ce qu'un couple donné soit appliqué sur l'arbre de cette première machine. On mesure alors la tension aux bornes du condensateur et on la compare avec une valeur de tension seuil. Si la tension observable aux bornes du condensateur est différente de la tension seuil, alors on pilote un deuxième onduleur associé à une deuxième machine afin de ramener la tension aux bornes du condensateur à la tension seuil.

Dans la pratique, lorsque la tension mesurée aux bornes du condensateur est supérieure à la tension seuil, le deuxième onduleur peut être commandé de plusieurs manières. Plus précisément, lorsque la deuxième machine se comporte en moteur, le deuxième onduleur est commandé par un dispositif de contrôle, de manière à ce que la deuxième machine convertisse davantage d'énergie électrique en énergie mécanique. Lorsque la deuxième machine électrique se comporte en générateur, l'onduleur est commandé, de manière à ce que la deuxième machine convertisse moins d'énergie mécanique en énergie électrique. Bien entendu, si la tension observable aux bornes du condensateur est inférieure à la tension seuil, le deuxième onduleur est commandé de manière inverse.

Une telle régulation est relativement stable et présente un temps de réponse très rapide, de l'ordre de la centaine de microsecondes. Ce type de régulation est souvent combiné avec un procédé de régulation dit de type mécanique.

Dans ce procédé de régulation mécanique, on a imaginé, que pour un changement de régime du moteur thermique, on allait commander les machines électriques, de manière à ce que ce moteur thermique fonctionne la majorité du temps à son point de fonctionnement optimum. Par point de fonctionnement optimum, on entend un point de fonctionnement où le régime et le couple du moteur correspondent, pour une puissance donnée, à une consommation minimale du moteur thermique.

Dans un tel procédé de régulation, un couple stabilisé auquel se positionne le moteur thermique pour fournir une puissance donnée est inférieur, de l'ordre de 30 pourcents, au couple maximal de ce moteur. Lors d'une accélération du véhicule, on peut ainsi obtenir rapidement une puissance supplémentaire en agissant sur l'alimentation en carburant du moteur thermique. Cette accélération se produit sans rupture du couple appliqué sur l'arbre des roues du véhicule.

Dans ce procédé de régulation mécanique, deux conditions doivent en permanence être vérifiées. Ainsi, le couple appliqué en aval d'un volant d'inertie accroché à l'arbre du moteur doit toujours être inférieur au couple stabilisé. Cette première condition a pour objet de ne pas étouffer le moteur. En outre, le couple appliqué sur l'arbre des roues doit toujours être inférieur à un couple de consigne. Cette deuxième condition a pour objet de ne pas emballer le véhicule. A chaque condition est associée une boucle fermée de régulation. Suivant la condition qui est remplie, la chaîne de régulation mécanique commute d'une boucle à une autre. Cette commutation entraîne une mauvaise précision dans l'application du couple sur l'arbre des roues. En effet, lors d'une commutation, comme on modifie la valeur du couple à comparer avec un couple de référence, on peut observer une variation du couple appliqué sur l'arbre des roues. Il peut même arriver que la chaîne de régulation mécanique diverge.

On connaît également du document FR-A-2 847 858, qui décrit le préambule de la revendication 1, un système de régulation qui assure que la tension aux bornes du condensateur soit maintenue en permanence à une valeur de consigne déterminée dite « valeur de consigne de tension », tout en étant capable d'agir sur le couple de chacune des deux machines électriques, soit séparément, soit simultanément, et en tous cas de manière continue, en réponse au signal d'erreur résultant de la comparaison de la valeur effective de cette tension par rapport à la valeur de consigne.

Toutefois, le procédé de régulation décrit dans ce document ne peut pas être utilisé dans toutes les situations de vie du véhicule sans conduire à des instabilités, d'où la nécessité d'une commutation entre une référence mécanique M et une référence électrique $\Sigma$.

La présente invention se propose de résoudre ce problème de précision et d'instabilité de la chaîne de régulation mécanique.

A cet effet, dans l'invention, on produit un signal de référence mécanique qui est intimement lié à un signal de référence électrique. Puis, en combinant des valeurs de ce signal de référence électrique et des valeurs de ce signal de référence mécanique, on détermine des couples de consigne à appliquer sur les arbres des deux machines électriques.

Plus précisément, dans l'invention, on produit un signal de référence électrique à partir d'une chaîne de régulation électrique. Et on produit un signal de référence mécanique à partir d'une chaîne de régulation mécanique. Cette chaîne de régulation mécanique utilise notamment comme paramètre des valeurs de couples de référence attendus sur les roues et sur l'arbre du moteur. On combine des valeurs de ces signaux de référence dans un système de deux équations à deux inconnues que l'on résout. Les valeurs trouvées correspondent aux couples de consigne attendus sur les arbres des machines électriques.

Conformément à l'invention, dans un espace donné, une droite associée au signal de référence mécanique est de préférence perpendiculaire à une droite associée au signal de référence électrique. Le fait d'avoir deux droites perpendiculaires permet de limiter la divergence de la chaîne de régulation et de la rendre plus précise. Les coordonnées du point intersection des droites correspondent aux couples de consigne attendus sur les arbres machines électriques.

Le signal de référence mécanique est en outre obtenu à l'aide d'une boucle de régulation ouverte. Cette boucle de régulation ouverte rend le procédé de régulation mécanique plus stable que le procédé connu qui met en oeuvre des boucles fermées.

L'invention concerne donc un procédé de régulation pour un dispositif de transmission de puissance entre un arbre d'un moteur thermique et un arbre de roues, selon la revendication 1.

L'invention sera mieux comprise à la lecture de la description qui suit et à l'examen des figures qui l'accompagnent. Ces figures sont données à titre illustratif mais nullement limitatif de l'invention. Ces figures montrent :

- Figure 1 : une représentation schématique d'un dispositif de transmission de puissance mettant en oeuvre le procédé selon l'invention ;
- Figure 2 : une représentation schématique d'un ensemble mécanique reliant entre eux un arbre d'un moteur thermique, des arbres de machines électriques et un arbre de roues ;
- Figure 3 : une représentation schématique d'un système de régulation mettant en oeuvre le procédé selon l'invention ;
- Figure 4 : une représentation graphique d'un ajustement des couples de référence attendus sur les arbres des machines électriques, réalisé en utilisant le procédé selon l'invention.

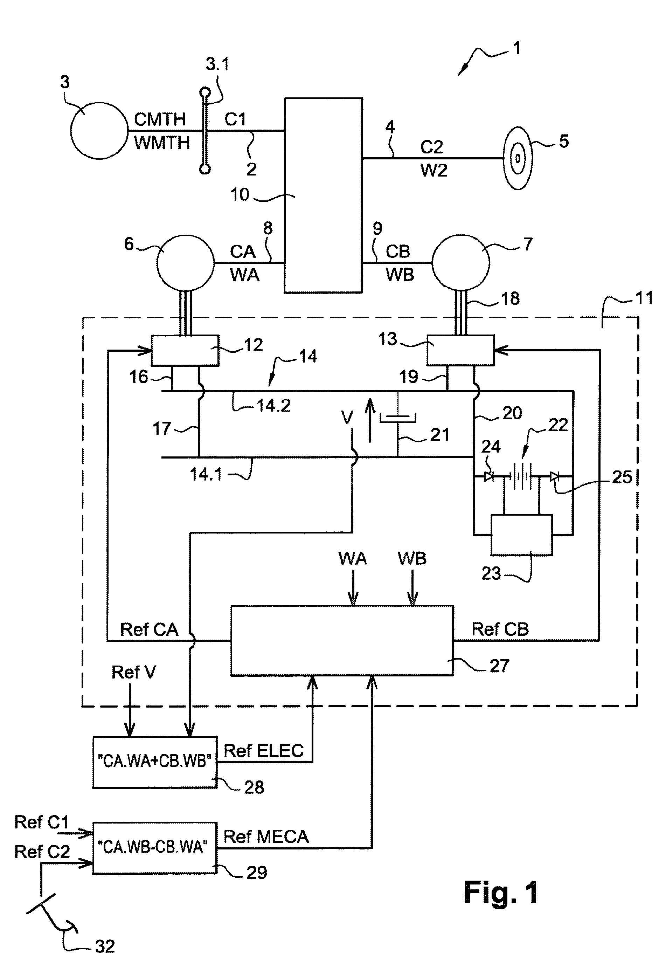

La figure 1 montre une représentation schématique d'un dispositif 1 de transmission de puissance entre un arbre 2 d'un moteur 3 et un arbre 4 de roues 5 du véhicule. Ce dispositif 1 comporte une première machine 6 électrique et une deuxième machine 7 électrique. L'arbre 2 du moteur 3 thermique, l'arbre 4 des roues 5 et des arbres 8 et 9 des machines 6 et 7 sont reliés entre eux par l'intermédiaire d'un ensemble 10 mécanique.

Un dispositif 11 de liaison relie les deux machines 6 et 7 entre elles. Ce dispositif 11 de liaison comporte notamment deux onduleurs 12 et 13 et un bus 14 de tension continue. Ce bus 14 comporte une première connexion 14.1 négative et une deuxième connexion 14.2 positive. Plus précisément, des phases 15 de la première machine 6 sont reliées à l'onduleur 12 qui est lui-même relié aux deux connexions du bus 14 par l'intermédiaire de deux liaisons 16 et 17 filaires. Des phases 18 de la deuxième machine 7 sont reliées à l'onduleur 13 qui est lui-même relié au bus 14 par l'intermédiaire de deux liaisons 19 et 20 filaires.

Un volant d'inertie 3.1 est accroché à l'arbre 2 du moteur 3. Un couple CMTH est observable en amont du volant d'inertie 3.1 sur l'arbre 2. Et un couple C1 est observable en aval de ce volant d'inertie 3.1 sur l'arbre 2. Cet arbre 2 possède une vitesse de rotation d'arbre WMTH. L'arbre 4 des roues 5 possède une vitesse de rotation W2 et un couple C2 est observable sur cet arbre 4. L'arbre 8 de la première machine 6 possède une vitesse de rotation WA et un couple électromagnétique CA. L'arbre 9 de la deuxième machine 7 possède une vitesse de rotation WB et un couple électromagnétique CB.

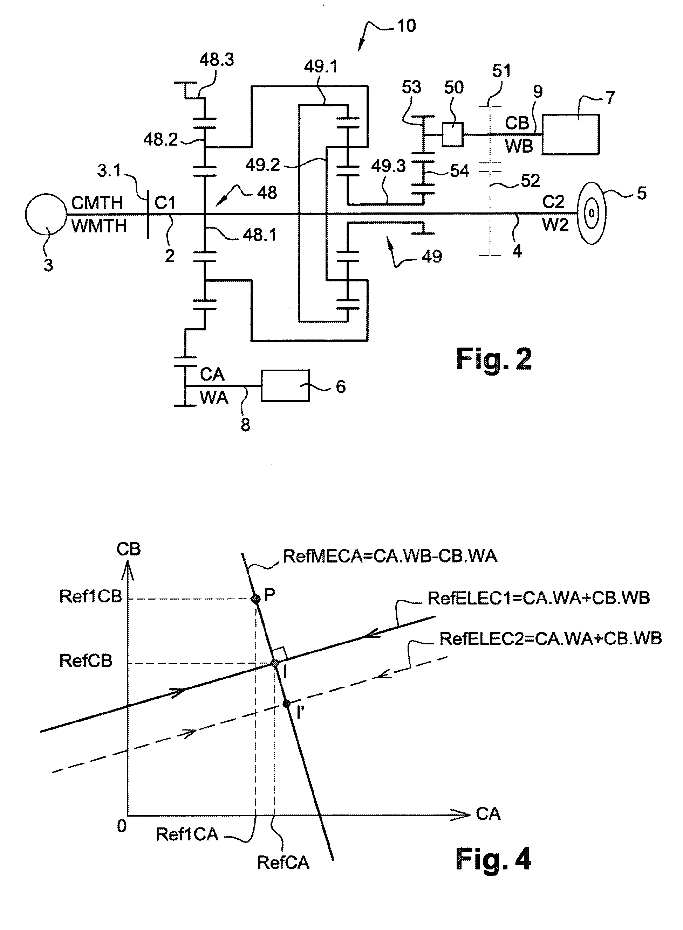

Il existe un équilibre entre les puissances produites et consommées par le moteur 3 et les machines 6 et 7 du dispositif 1 de transmission. Ainsi, l'ensemble de ces couples et de ces vitesses de rotation vérifie des équations caractéristiques de l'ensemble 10 mécanique. Ces équations sont appelées équations de transmission et seront données dans la description de la figure 2.

Une partie de la puissance produite par le moteur 3 peut être directement transmise à l'arbre 4 des roues 5 par l'intermédiaire d'une chaîne mécanique comportant l'ensemble mécanique 10. Une partie de cette puissance peut aussi être dérivée dans une chaîne électrique comportant la liaison 11 électrique et les deux machines 6 et 7.

Dans cette réalisation, aucun système de stockage de forte capacité n'est relié au bus 14. Une énergie produite par une des machines 6 ou 7 est donc automatiquement consommée par l'autre machine. Ainsi, lorsqu'une des machines 6 ou 7 se comporte en moteur, l'autre machine se comporte en générateur.

Lorsqu'une des machines 6 ou 7 se comporte en générateur, l'onduleur 12 ou 13 qui lui est associé transforme des signaux de tension alternatifs observables aux bornes des bobines de la machine en un signal de tension continue observable sur le bus 14. Les transistors de l'onduleur 12 ou 13 sont alors souvent bloqués, de manière à ce que des diodes de roue libre reliant chacune un émetteur et un collecteur d'un transistor forment un pont de diodes.

Lorsqu'une des machines 6 ou 7 se comporte en moteur, l'onduleur 12 ou 13 qui lui est associé transforme la tension continue observable sur le bus 14 en signaux de tension alternatifs et déphasés qui sont appliqués aux bornes des bobines de la machine 6 ou 7. Les onduleurs 12 et 13 sont commandés de manière à faire varier l'intensité et la fréquence du courant traversant les bobines de la machine 6 ou 7 qui leur est associée. L'intensité du courant traversant les bobines de la machine est liée à l'intensité du couple produit par cette machine; tandis que la fréquence du courant traversant les bobines de la machine est liée à la vitesse de rotation de l'arbre de cette machine.

Dans la pratique, les machines 6 et 7 utilisées sont des machines électriques triphasées de type synchrone. Ces machines sont intéressantes car elles sont compactes et présentent un bon rendement.

Un système de stockage de faible capacité, tel qu'un condensateur 21, est relié entre les deux connexions 14.1 et 14.2 du bus 14. Ce système de stockage est dit de petite capacité par opposition au système de stockage de forte capacité précité. Le système de stockage de forte capacité peut être relié au bus 14 et emmagasiner une quantité d'énergie suffisante pour participer à l'ajustement du couple appliqué sur l'arbre 4 des roues 5. En revanche, le condensateur 21 permet d'assurer simplement un équilibrage de puissance entre les machines 6 et 7. Cet équilibrage se produit lorsque des variations de tension sont observables sur le bus 14. Une tension V est mesurable aux bornes du condensateur 21. En variante, le dispositif de stockage 21 de faible capacité est une petite batterie de faible capacité. En variante, aucun dispositif de stockage 21 de faible capacité n'est relié entre les connexions 14.1 et 14.2 du bus 14.

De préférence, une batterie 22 de service est reliée au bus 14 par l'intermédiaire d'un convertisseur 23. Aux bornes de cette batterie 22, est observable une tension beaucoup plus faible que la tension observable sur le bus 14. Cette batterie 22 de service fournit une puissance d'appoint aux machines 6 et 7. Cette puissance d'appoint permet de faire démarrer le moteur sans l'aide d'un démarreur. Le convertisseur 23 permet de transformer la haute tension continue observable sur le bus 14 en une basse tension continue pour recharger la batterie 22 de service.

Une première et une deuxième diode 24 et 25 sont reliées au bus 14 de manière à protéger la batterie 22 de service de la haute tension observable sur le bus 14. Plus précisément, une anode de la première diode 24 est reliée à la connexion négative 14.1 du bus 14; tandis qu'une cathode de la première diode 24 est reliée à une borne négative de la batterie 22. Une anode de la deuxième diode 25 est reliée à une borne positive de la batterie 22; tandis qu'une cathode de cette deuxième diode 25 est reliée à la connexion positive 14.2 du bus 14.

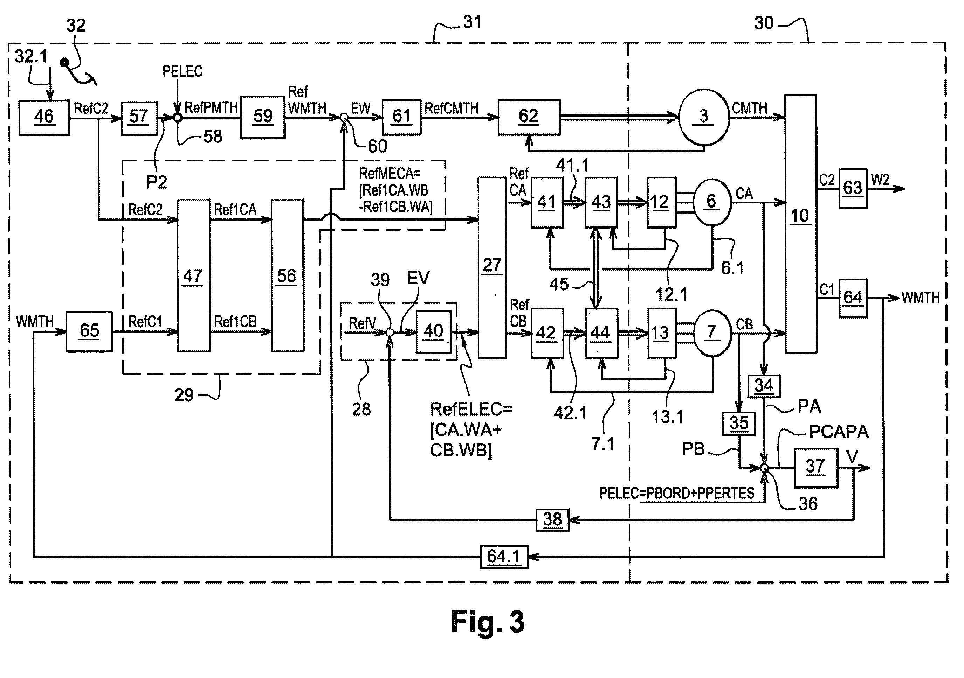

Le dispositif 11 de liaison comporte en outre un module 27 de régulation qui permet de réguler les valeurs des couples CA et CB observables respectivement sur l'arbre de la première machine 6 et sur l'arbre de la deuxième machine 7. A cet effet, un signal de référence électrique RefELEC et un signal de référence mécanique RefMECA sont issus respectivement, comme on va le voir dans la figure 3, d'une boucle de régulation électrique et d'une boucle de régulation mécanique. Ces signaux de référence RefELEC et RefMECA sont émis respectivement sur une première entrée et une deuxième entrée du dispositif 27 de régulation.

A partir de ces signaux RefELEC et RefMECA, ce dispositif 27 de régulation émet des signaux de consigne dits RefCA et RefCB. Ces signaux de consigne RefCA et RefCB commandent respectivement les onduleurs 12 et 13, de manière à ce que des courants parcourant les bobines des machines 6 et 7 engendrent des couples de consigne sur les arbres 8 et 9 des machines.

Plus précisément, le signal de référence électrique RefELEC correspond à CA*WA+CB*WB et le signal de référence mécanique RefMECA correspond à CA*WB-CB*WA. Les signaux de consigne RefCA et RefCB sont produits par combinaison linéaire du signal de référence électrique RefELEC et du signal de référence mécanique RefMECA, à l'aide du dispositif 27 de régulation. Le signal de référence électrique RefELEC correspond à la puissance électrique dissipée dans la chaîne électrique. Ce signal de référence électrique RefELEC est produit à partir du signal de tension V observable aux bornes du condensateur 21. Comme on l'a vu, ce signal de tension V est comparé avec un signal de tension de seuil RefV dans une boucle de régulation électrique.

Le signal de référence mécanique refMECA est obtenu par simulation à partir d'un signal de référence RefC1 et d'un signal de référence RefC2. Le signal de référence RefC1 correspond au couple attendu sur l'arbre 2 en aval du volant 3.1 d'inertie. Le signal de référence RefC2 correspond au couple attendu sur l'arbre 4 des roues 5.

Dans une réalisation particulière, le signal de tension V et le signal de tension de seuil RefV sont appliqués respectivement sur une première entrée et une deuxième entrée d'un premier module 28 de régulation. En sortie de ce premier module 28 de régulation, est observable le signal de référence électrique RefELEC. Les signaux de référence RefC1 et RefC2 sont appliqués chacun sur une entrée d'un deuxième module 28 de régulation. En sortie de ce deuxième module 29 de régulation, est observable le signal de référence mécanique RefMECA.

En outre, des signaux WA et WB sont respectivement appliqués sur une troisième et une quatrième entrée du dispositif 27. Ces signaux WA et WB correspondent respectivement à la vitesse de rotation de l'arbre 8 de la première machine 6 et à la vitesse de rotation de l'arbre 9 de la deuxième machine 7.

Pendant le temps de traitement des signaux de référence RefELEC et RefMECA, les valeurs des vitesses de rotation WA et WB sont considérées comme figées. En effet, les arbres 8 et 9 présentent une inertie et la durée nécessaire à un changement de leur vitesse de rotation est beaucoup plus longue que le temps de réponse de la boucle de régulation électrique.

A l'intérieur du dispositif 27 de régulation, on entre deux équations :

$$(1)\ RefELEC=CA*WA+CB*WB$$

$$(2)\ RefMECA=CA*WB-CB*WA$$

Les coefficients WA et WB sont figés et on entre comme données RefELEC et RefMECA. A partir des équations (1) et (2), on peut donc déterminer CA et CB qui sont en fait RefCA et RefCB.

Si on modifie la mise en forme des équations, on peut établir

$$(1)\ CB=(-WA/WB)*CA - refELEC/WB$$

$$(2)\ CB=(WB/WA)*CA - refMECA/WA$$

Si on considère un repère dans lequel on porte CB en ordonnée et CA en abscisse, ces équations (1) et (2) correspondent à des équations de deux droites affines qui sont perpendiculaires l'une par rapport à l'autre. En effet, les coefficients directeurs WB/WA et -WA/WB des droites associées à ces deux équations (1) et (2) sont opposés et inverses l'un par rapport à l'autre. Le système formé par les équations (1) et (2) possède donc toujours une solution. Le fait qu'il y ait toujours une solution rend particulièrement stable la régulation les valeurs des couples CA et CB à appliquer sur les arbres des deux machines 6 et 7. Les signaux de consigne RefCA et RefCB pourront en effet toujours être produits.

En outre, le fait que les deux droites soient perpendiculaires permet à la régulation des couples CA et CB d'être plus précise. En effet, on verra dans la figure 4 que, pour une variation de la valeur du signal de référence électrique RefELEC, les valeurs des signaux de consigne RefCA et RefCB ne varient que très peu par rapport aux valeurs des signaux de consigne RefCA et RefCB précédents.

En variante, les équations (1) et (2) sont associées à deux droites qui se coupent et forment un angle quelconque entre elles.

Le bus 14 électrique constitue plus généralement une liaison électrique qui relie les deux onduleurs 12 et 13 entre eux. Ces deux onduleurs 12 et 13 constituent d'ailleurs plus généralement des dispositifs transmetteurs qui transmettent ou prélèvent de la puissance aux machines électriques 6 et 7. Dans une variante de l'invention, la liaison électrique 14 est un bus de tension triphasée qui relie les dispositifs transmetteurs. Dans cette variante, les dispositifs transmetteurs prennent alors la forme de commutateurs commandés par les signaux de référence RefCA et RefCB.

La figure 2 montre une représentation schématique de l'ensemble 10 mécanique selon l'invention. Son étude est nécessaire pour la compréhension des équations de transmission qui lui sont associées. Comme on va le voir dans la figure 3, ces équations de transmission sont utilisées dans la mise en oeuvre du procédé selon l'invention.

L'ensemble mécanique 10 est formé par un premier train 48 épicycloïdal et un deuxième train 49 épicycloïdal. Ces trains 48 et 49 comportent chacun un planétaire, un porte-satellites et une couronne qui engrènent mutuellement. Dans cette réalisation, le planétaire 48.1 du premier train 48 épicycloïdal est relié à la couronne 49.1 du deuxième train 49 et le porte-satellites 48.2 du premier train 48 est relié au porte-satellites 49.2 du deuxième train 49. L'arbre 2 du moteur 3 est accroché au planétaire 48.1 du premier train 48. L'arbre 8 de la première machine 6 est relié à la couronne 48.3 du premier train 48. L'arbre 9 de la deuxième machine 7 est relié à un planétaire 49.3 du deuxième train 49. En variante, ces trains 48 et 49 épicycloïdaux sont reliés entre eux de manière différente, mais ils présentent toujours 4 degrés de liberté, un pour chaque arbre.

Dans cette réalisation décrite plus en détail dans la demande FR-A-2832357, l'ensemble 10 mécanique possède un premier et un deuxième mode de fonctionnement. Dans le premier mode de fonctionnement, l'arbre 9 est relié à l'arbre 4 des roues 3 par l'intermédiaire d'un premier engrenage 51 et d'une première roue 52. Ce premier mode de fonctionnement est mis en oeuvre pour des rapports de transmission courts. Dans le deuxième mode de fonctionnement, l'arbre 9 est relié au planétaire 49.3 du deuxième train 49 par l'intermédiaire d'un deuxième engrenage 53 et d'une deuxième roue 54. Ce deuxième mode de fonctionnement est mis en oeuvre pour des rapports de transmission long.

Pour assurer la commutation d'un mode à l'autre, un crabot 50 se déplace en translation sur l'arbre 9. Suivant sa position sur l'arbre 9, le crabot 50 entraîne en rotation soit le premier engrenage 51, soit le deuxième engrenage 53. L'arbre 9 peut ainsi toujours être relié à l'élément qui tourne le moins vite entre l'arbre 9 et le planétaire 49.3. Le fait de relier l'arbre 9 à l'élément qui tourne le moins vite permet de limiter la puissance dissipée dans la chaîne électrique.

En général, on peut établir les équations de transmission suivantes :

$$(3) \quad C2 = K1*C1 + K2*CB$$

$$(4) \quad CA = K3*C1 \text{ (dans le premier mode de fonctionnement)}$$

$$(5) \quad C1 = K4*CA + K5*CB \text{ (dans le deuxième mode de fonctionnement)}$$

K1 est une constante liée à la raison du premier train 48 épicycloïdal. K2 est une constante liée à des rapports d'engrenages. K4 et K5 sont des constantes liées à des rapports d'engrenages et à des raisons des trains 48 et 49.

L'équation (3) indique que le couple C2 appliqué sur l'arbre 4 des roues 5 est égal à la somme du couple C1 observable en aval du volant 3.1 d'inertie et du couple CB appliqué sur l'arbre 9 de la deuxième machine 7, aux coefficients multiplicateurs près. L'équation (4) indique que dans le premier mode de fonctionnement, le couple CA appliqué sur l'arbre 8 de la première machine 6 est proportionnel au couple C1. L'équation (5) indique que dans le deuxième mode de fonctionnement, le couple C1 est égal à la somme du couple CA et du couple CB, aux coefficients multiplicateurs près.

La figure 3 montre un exemple détaillé d'un système de régulation mettant en oeuvre le procédé de régulation selon l'invention. Dans ce système, on distingue une partie puissance 30 et une partie commande 31.

La partie puissance 30 comporte le moteur 3, les machines 6 et 7 ainsi que les onduleurs 12 et 13 qui leur sont associés. En outre, la partie puissance 30 comporte l'ensemble 10 mécanique.

La partie commande 31 comporte des dispositifs de commande, notamment le dispositif 27 de régulation et les modules 28 et 29 de régulation étudiés dans la figure 1. A partir d'un enfoncement d'une pédale 32 d'accélérateur, ces dispositifs de commande émettent des signaux qui commandent les différents organes de la partie puissance 30. Ces organes fournissent alors l'énergie nécessaire au véhicule afin qu'il puisse produire une accélération demandée.

Par ailleurs, dans ce système de régulation, on distingue la chaîne de régulation électrique dont les éléments sont légèrement grisés, et la chaîne de régulation mécanique dont les éléments ne sont pas grisés. Ces chaînes de régulation sont notamment caractérisées par leur temps de réponse.

Dans la chaîne de régulation électrique, des signaux de couple CA et CB correspondent aux couples observables sur les deux machines électriques 6 et 7. Ces signaux de couple CA et CB sont respectivement appliqués en entrée d'une première cellule multiplicative 34 et d'une deuxième cellule multiplicative 35. Ces cellules multiplicatives 34 et 35 multiplient la valeur du signal de couple qui leur est appliqué en entrée par une valeur de vitesse de rotation. Ainsi, la valeur du signal de couple CA est multipliée par WA et la valeur du signal de couple CB est multipliée par WB.

Un signal de puissance PA et un signal de puissance PB sont donc observables respectivement en sortie de la première cellule 34 multiplicative et de la deuxième cellule 35 multiplicative. Ces signaux de puissance PA et PB correspondent respectivement à la puissance électrique transmise par la machine 6 et à celle transmise par la machine 7.

Ces signaux de puissance PA et PB sont respectivement appliqués sur une première et une deuxième entrée d'un sommateur 36. Sur une troisième entrée de ce sommateur 36, est appliqué un signal de puissance PELEC correspondant aux pertes PPERTES des machines électriques et à une puissance PBORD consommée par le réseau de bord. En sortie de ce sommateur 36, est alors observable un signal de puissance PCAPA correspondant à la puissance absorbée par le condensateur 21.

Ce signal de puissance PCAPA est appliqué en entrée d'une cellule 37 de fonction de transfert 1/(V'*C*p). V' correspond à la tension observable sur le bus 14. C correspond à la capacité du condensateur 21. p correspond à un opérateur de Laplace. En divisant la puissance PCAPA absorbée par le condensateur 21 par la tension V', on obtient le courant qui traverse ce condensateur 21. Dans le domaine de Laplace, l'impédance d'un condensateur vaut 1/Cp. Ainsi, en multipliant le courant PCAPA/V' traversant le condensateur 21 par l'impédance 1/(C*p) de ce condensateur 21, on obtient le signal de tension V observable aux bornes de ce condensateur 21. Ce signal de tension V est appliqué en entrée d'une cellule 38 qui multiplie ce signal par -1.

Le signal obtenu en sortie de la cellule 38 est alors appliqué sur une première entrée d'un sommateur 39. Sur une deuxième entrée de ce sommateur 39, est appliqué le signal de tension de seuil RefV qui correspond à la tension attendue aux bornes du condensateur 21. Ainsi, le signal de tension V effectivement observable aux bornes du condensateur 21 est comparé avec le signal de tension de seuil Vref. Un signal d'erreur EV est alors observable en sortie du comparateur 36.

Ce signal d'erreur EV est appliqué en entrée d'une première cellule 40 correctrice. Cette cellule 40 correctrice est de préférence un correcteur de régulation de type PI, Proportionnelle, Intégrale. En sortie de la cellule 40 correctrice, on obtient le signal de référence électrique RefELEC. Le premier module 28 de régulation comporte donc en fait le sommateur 39 et la cellule correctrice 40.

Comme on l'a vu, le signal de référence électrique RefELEC est appliqué sur une première entrée du dispositif 27 de régulation. Sur la deuxième entrée du dispositif 27 de régulation, est appliqué le signal de référence mécanique RefMECA auquel nous allons nous intéresser un peu plus loin. Le dispositif 27 de régulation produit les signaux de consigne RefCA et RefCB correspondant aux couples attendus sur les arbres 8 et 9.

Le signal de consigne RefCA et le signal de consigne RefCB sont appliqués respectivement en entrée d'une première cellule 41 de commande et d'une deuxième cellule 42 de commande. Ces cellules 41 et 42 de commande produisent chacune trois signaux d'information 41.1 et 42.1. Les signaux d'information 41.1 et les signaux d'information 42.1 correspondent aux signaux de tension à appliquer aux bornes des bobines de la machine 6 ou 7 qui leur est associée.

Les signaux d'information 41.1 et les signaux d'information 42.1 sont appliqués respectivement en entrée d'un premier dispositif 43 modulateur d'impulsions et d'un deuxième dispositif 44 modulateur d'impulsions. Ces dispositifs 43 et 44 modulateur d'impulsions calculent les instants auxquels des signaux de commande doivent être appliqués sur des bases des transistors des onduleurs 12 et 13 et produisent ces signaux de commande. Ces dispositifs 43 et 44 modulateur d'impulsions permettent de faire varier la durée pendant laquelle les transistors sont passants, de manière à faire varier la puissance électrique transmise par les machines 6 et 7. Dans la pratique, les cellules 41 et 42 de commande et les dispositifs 43 et 44 modulateur d'impulsions sont intégrés dans un même circuit électronique.

Dans son ensemble, la boucle de régulation électrique possède un temps de réponse très court, de l'ordre de la centaine de microsecondes. En outre, le temps de réponse d'asservissements 12.1, 13.1 entre les onduleurs 12 et 13 et les dispositifs 42 et 43 modulateur d'impulsion est très court, de même que le temps de réponse d'asservissements 6.1 et 7.1 entre les machines 6 et 7 et les cellules 41 et 42 de commande. En effet, ces temps de réponse sont là encore de l'ordre de la centaine de microsecondes.

Dans la boucle de régulation mécanique, un signal 32.1 correspondant à un degré d'enfoncement de la pédale 32 par un utilisateur est appliqué en entrée d'une cellule 46 de loi pédale. En fonction du degré d'enfoncement de la pédale 32, cette cellule 46 de loi pédale produit le signal de référence RefC2 qui correspond au couple attendu sur l'arbre 4 des roues 5. Autrement dit, le signal de référence refC2 est simulé à l'aide de la cellule 46 de loi pédale.

Ce signal de référence RefC2 participe à la commande du moteur 3 et à l'ajustement des signaux de consigne RefCA et RefCB. A cet effet, le signal de référence RefC2 est appliqué sur une première entrée d'un module 47 de transmission. Le signal de référence RefC1 est appliquée sur une deuxième entrée du module 47 de transmission.

La fonction de transfert du module 47 de transmission correspond aux équations de transmission de l'ensemble 10 mécanique. Ainsi, dans le module 47 de transmission, les équations (3), (4), (5) de transmission précitées sont entrées sous la forme :

$$(3')\ RefC2 = K1*RefC1 + K2*Ref1CB$$

## (4') Ref1CA = K3*RefC1 (dans le premier mode de fonctionnement)

## (5') RefC1 = K4*Ref1CA + K5*Ref1CB (dans le deuxième mode de fonctionnement)

On connaît les valeurs des signaux de référence RefC1 et RefC2 et les valeurs des constantes K1-K5. Dans chaque mode, on peut établir deux équations. On peut donc déduire des valeurs de signaux de référence intermédiaire Ref1 CA et Ref1 CB.

Ces signaux de référence intermédiaire Ref1CA et Ref1CB sont appliqués en entrée d'un module 56 assurant une combinaison linéaire de valeurs de ces signaux. En sortie de ce module 56 de combinaison linéaire, est observable le signal de référence mécanique RefMECA. Le dispositif 27 de régulation mécanique résout ensuite le système formé par les équations (1) et (2). Dans une réalisation particulière, ce dispositif 27 est une cellule de Cramer permettant de résoudre de tels équations. En variante, le dispositif 27 est une cellule vectorielle qui réalise une analyse vectorielle pour résoudre les équations (1) et (2). Le deuxième module 29 de régulation comporte ainsi le module 47 de transmission et le module 56 de combinaison.

En résumé, dans l'invention, les signaux de référence RefC1 et RefC2 sont traités et combinés à l'aide du module 47 de transmission et du module 56 de combinaison. Après cette combinaison et ce traitement des signaux de référence RefC1 et RefC2, le signal de référence mécanique RefMECA est observable en sortie du module 56 de combinaison. Et pour produire les signaux de consigne RefC1 et RefC2, le signal de référence mécanique RefMECA est combiné avec le signal de référence électrique RefELEC.

En outre, dans la chaîne de régulation mécanique, le signal de référence RefC2 est appliqué en entrée d'un module 57 multiplicateur. Ce module 57 multiplicateur multiplie la valeur du signal de référence RefC2 par la vitesse de rotation W2 de l'arbre 4 des roues 5. Un signal de puissance P2 est observable en sortie de ce module 57 multiplicateur. Ce signal de puissance P2 correspond à la puissance transmise par l'arbre 4 des roues 5.

Ce signal de puissance P2 est appliqué sur une première entrée d'un sommateur 58. Sur une deuxième entrée de ce sommateur 58, est appliqué le signal de puissance PELEC. Le sommateur 58 assure ainsi la somme de la puissance consommée dans la chaîne mécanique et de la puissance consommée dans la chaîne électrique. En sortie de ce sommateur 58, on observe donc un signal de puissance de référence PMTH. Ce signal de puissance de référence PMTH correspond à la puissance qui devrait être fournie par le moteur 3 pour obtenir une accélération correspondant à l'enfoncement de la pédale 32.

Le signal de puissance de référence PMTH du moteur 3 est appliqué en entrée d'un premier module 59 de cartographie du moteur. Ce premier module 59 de cartographie permet, à partir d'une puissance donnée, de déterminer le régime du moteur 3 pour lequel la consommation de ce moteur est minimale. En sortie de ce module 59, est donc observable un signal de référence RefWMTH correspondant à une vitesse de rotation attendue de l'arbre 2 du moteur 3.

Ce signal de référence RefWMTH est appliqué sur une première entrée d'un sommateur 60. Sur une deuxième entrée du sommateur 60, est appliqué un signal -WMTH. Ce signal -WMTH correspond au signal de la vitesse de rotation réelle de l'arbre 2 du moteur 3 multiplié par moins un. Cette multiplication par moins un est réalisée à l'aide d'un module 64.1. En sortie du sommateur 60 est observable un signal d'erreur EW. Ce signal EW est appliqué en entrée d'une cellule correctrice 61 qui est là encore un correcteur de régulation de type PI, Proportionnel, Intégral. En sortie de ce cette cellule correctrice 61, est observable un signal de couple de référence RefCMTH. Ce signal de couple de référence RefCMTH correspond au couple attendu sur l'arbre 2 moteur 3.

Ce signal de couple de référence RefCMTH est appliqué en entrée d'un module 62 de contrôle du moteur 3 thermique. Ce module 62 de contrôle commande notamment l'injection d'essence à l'intérieur du moteur 3. Il existe un asservissement entre le moteur 3 et le module 62 de contrôle. Le temps de réponse de cet asservissement est long comparativement au temps de réponse observables dans la chaîne électrique, de l'ordre de 100 microsecondes.

En sortie du module 10, le couple C2 produit l'accélération du véhicule. Il en résulte à terme une vitesse W2 correspondant à la vitesse de rotation de l'arbre 4 des roues 5. Cette rotation de dépendance est représentée sur la figure 3 par une cellule 63 de type connu.

Egalement en sortie du module 10, le couple C1 définit le couple de charge du moteur thermique 3. En combinaison avec le couple moteur de ce moteur thermique 3, il en résulte l'accélération du moteur 3, et donc à terme sa vitesse WMTH. Cette relation de dépendance est représentée sur la figure 3 par une cellule 64 de type connu.

La vitesse WMTH du moteur 3 thermique est mesurée et le signal WMTH est appliquée en entrée d'un module 64.1 qui multiplie par -1 les valeurs du signal WMTH. Le signal observable en sortie du module 64.1 est appliquée en entrée d'un deuxième module 65 de cartographie. Pour une vitesse de rotation donnée, ce deuxième module 65 de cartographie détermine le couple pour lequel la puissance consommée par le moteur est minimale. En sortie de ce deuxième module 65 de cartographie, est donc observable le signal de couple de référence RefC1. Ce signal de couple de référence RefC1 est appliqué sur une entrée du module 47 de transmission.

En variante, les cellules correctrices 40 et 61 sont des cellules correctrices de type dérivé uniquement, ou intégral uniquement, ou proportionnel, dérivé et intégral.

La figure 4 montre une représentation graphique d'un ajustement des couples de référence attendus sur les arbres des machines 6 et 7 à l'aide du procédé selon l'invention. Dans un plan où on porte en abscisse CA et en ordonné CB, on représente des droites associées au signal de référence électrique RefELEC et une droite associée au signal de référence mécanique RefMECA. Comme la régulation dans la boucle électrique est bien plus rapide que la régulation dans la boucle mécanique, on considère comme précité que WA et WB sont constants.

Lors d'un premier traitement du signal de tension V, on produit une première valeur de signal de référence électrique RefELEC1. Pour cette valeur de signal de référence RefELEC1, on représente la droite affine d'équation RefELEC1=CA*WA+CB*WB.

A l'aide du module de transmission, on produit des signaux de couples intermédiaires Ref1CA et Ref1CB calculés à partir des signaux de référence RefC1 et RefC2. Cette détermination des signaux intermédiaires Ref1 CA et Ref1 CB permet de déterminer un point P de passage. En effet, ce point P possède comme coordonnées les valeurs de ces signaux intermédiaires Ref1 CA et Ref1 CB.

Conformément à l'invention, le dispositif 27 de régulation produit une droite affine d'équation RefMECA=CA*WB-CB*WA. La droite associée à RefMECA passe ainsi par le point P de passage. La droite associée à RefMECA possède un coefficient directeur qui la rend perpendiculaire à la droite associée à RefELEC1.

L'intersection de la droite associée à la référence électrique RefELEC1 et de la droite associée à la référence mécanique RefMECA est un point I. Les coordonnées de ce point I correspondent aux valeurs des signaux de référence RefCA et RefCB à appliquer en entrée des cellules 41 et 42 de commande. Ce procédé permet ainsi de déterminer précisément le point dont les coordonnées vérifient les deux équations (1) et (2) parmi les points candidats sur la droite de RefELEC.

La boucle de régulation électrique permet d'ajuster les valeurs produites par la boucle de régulation mécanique. En effet, l'intersection des deux droites déplace le point P issu d'une simulation vers le point I.

Lors d'un deuxième traitement du signal de tension V, la valeur du signal de référence électrique RefELEC change et devient RefELEC2. La droite associée à RefELEC2 est ici parallèle à la droite associée à RefELEC1. En effet, on considère qu'entre les deux traitements du signal de tension V, les vitesses de rotation WA et WB des arbres des machines sont inchangées. Le point d'intersection correspondant aux valeurs des signaux de couple RefCA et RefCB se déplace ainsi en I'. Le fait que les droites associées à RefMECA et RefELEC soient perpendiculaires permet de limiter les écarts de valeurs de consigne entre deux traitements successifs.

Bien entendu, dans le cas général, les coefficients directeurs des deux droites associées à RefELEC et à RefMECA peuvent prendre des valeurs quelconques. Le point I peut se trouver n'importe où dans le plan (CA, CB) et les droites associées à RefELEC et à RefMECA peuvent réaliser une rotation de 360 degrés dans ce plan.

**Revendications**

1. - Procédé de régulation pour un dispositif (1) de transmission de puissance entre un arbre (2) d'un moteur (3) thermique et un arbre (4) de roues (5), ce procédé mettant en oeuvre

   - deux machines (6, 7) électriques, une première machine (6) possédant une vitesse WA de rotation d'arbre et un couple CA, une deuxième machine (7) possédant une vitesse WB de rotation d'arbre et un couple CB,
   - un ensemble (10) mécanique reliant entre eux l'arbre (4) des roues (5), l'arbre (2) du moteur (3) et les arbres (8, 9) des deux machines (6, 7) électriques,
   - un dispositif (11) de liaison assurant un passage direct d'une puissance électrique entre les deux machines (6, 7),
   - le dispositif (11) de liaison comportant un dispositif (27) de régulation produisant des signaux de consigne RefCA et RefCB destinés à être suivis par les deux machines (6, 7), et dans lequel
   - on produit un signal de référence électrique RefELEC correspondant, à CA*WA+CB*WB et on l'applique sur une première entrée du dispositif (27) de régulation
   - on produit un signal de référence mécanique ReIMECA correspondant à CAxWB-CBxWA et on l'applique sur une deuxième entrée du dispositif (27) de régulation

   **caractérisé en ce que** pour produire le signal de référence mécanique RefMECA,:

- on produit un signal de référence refC1 qui correspond au couple qui est attendu sur l'arbre (2) du moteur (3) en aval d'un voyant (3.1) d'inertie accroché à cet arbre (2),
- on produit par simulation un signal de référence refC2 qui correspond au couple qui est attendu sur l'arbre (4) des roues (3), et
- on applique le signal de référence refC1 et le signal de référence refC2 sur des entrées d'une cellule (47) de résolution, de fonction de transfert correspondant à des équations déterministes de transmission du dispositif (1) de transmission,
- or produit à l'aide de cette cellule (47) de résolution les signaux intermédiaires de référence Ref1CA et Ref1CB,
- on applique les signaux intermédiaires de référence Ref1CA et Ref1CB sur des entrées d'une cellule (56) de combinaison qui effectue une combinaison alinéaire des valeurs des signaux qui lui sont appliqués en entrée, et
- on produit en sortie de cette cellule (56) de combinaison le signal RefMECA, et
- avec le dispositif (27) de régulation, on produit les signaux de consigne RefCA et RefCB par combinaison linéaire du signal de référence électrique RefELEC et du signal de référence mécanique RefMECA.

2. - Procédé selon la revendication 1, **caractérisé en ce que** pour produire les signaux de consigne RefCA et RefCB,

- on résout avec une cellule (27) de Cramer deux équations égales respectivement à RefELEC et RefMECA avec des coefficients égaux à WA et WB, et
- on produit des variables solutions égales à RefCA et RefCB.

3. - Procédé selon l'une des revendications 1 ou 2, **caractérisé en ce que** pour produire le signal de référence électrique RefELEC,

- on mesure un signal de tension V aux bornes du dispositif de stockage,
- on fait la différence entre ce signal de tension V mesuré et un signal de consigne Vref et on obtient un signal d'erreur EV,
- on applique ce signal d'erreur EV en entrée d'une cellule correctrice (40), et
- on produit à l'aide de cette cellule correctrice (40) le signal de référence électrique RefELEC.

4. - Procédé selon la revendication 3, **caractérisé en ce que** la cellule correctrice (40) est du type proportionnel intégral.

5. - Procédé selon l'une des revendications 1 à 4, **caractérisé en ce que**

- on transmet les signaux de consigne RefCA et RefCB par l'intermédiaire de dispositifs (12, 13) transmetteurs, et
- on relie entre eux les dispositifs (12, 13) transmetteurs par une liaison (14) électrique.

6. - Procédé selon la revendication 5, **caractérisé en ce que**

- on place sur la liaison (14) électrique un dispositif (21) de stockage d'énergie de faible capacité.

7. - Procédé selon la revendication 6 **caractérisé en ce que**

- le dispositif de stockage d'énergie de faible capacité (21) est un condensateur.

8. - Procédé selon l'une des revendications 5 à 7 **caractérisé en ce que**

- les dispositifs (12,13) transmetteurs sont des onduleurs et la liaison (14) électrique est un bus de tension continu.

**Claims**

1. Regulating method for a device (1) for transmitting power between a shaft (2) of a combustion engine (3) and a shaft (4) for wheels (5), this method employing

- two electric machines (6, 7), a first machine (6) having a shaft rotation speed WA and a torque CA, and a second machine (7) having a shaft rotation speed WB and a torque CB,
- a mechanical assembly (10) interconnecting the shaft (4) for the wheels (5), the shaft (2) of the engine (3), and the shafts (8, 9) of the two electrical machines (6, 7),

- a connection device (11) providing a direct passage of an electrical power between the two machines (6, 7)
- the connection device (11) comprising a regulating device (27) which produces setpoint signals RefCA and RefCB intended to be followed by the two machines (6, 7), and in which
- an electrical reference signal RefELEC corresponding to $CA \times WA + CB \times WB$ is produced and applied to a first input of the regulating device (27), and
- a mechanical reference signal RefMECA corresponding to $CA \times WB - CB \times WA$ is produced and applied to a second input of the regulating device (27),

**characterized in that**, in order to produce the mechanical reference signal RefMECA:

- a reference signal refC1 is produced which corresponds to the torque which is expected on the shaft (2) of the engine (3) downstream of a flywheel (3.1) attached to this shaft (2),
- a reference signal refC2 which corresponds to the torque which is expected on the shaft (4) for the wheels (5) is produced by simulation, and
- the reference signal refC1 and the reference signal refC2 are applied to inputs of a resolution cell (47) have a transfer function corresponding to deterministic transmission equations of the transmission device (1),
- the intermediate reference signals Ref1CA and Ref1CB are produced with the aid of this resolution cell (47),
- the intermediate reference signals Ref1CA and Ref1CB are applied to inputs of a combination cell (56) which performs a linear combination of the values of the signals which are applied to it as input, and
- the signal RefMECA is produced at the output of this combination cell (56), and
- with the regulating device (27), the setpoint signals RefCA and RefCB are produced by linear combination of the electrical reference signal RefELEC and of the mechanical reference signal RefMECA.

2. Method according to Claim 1, **characterized in that**, in order to produce the setpoint signals RefCA and RefCB,

- two equations respectively equal RefELEC and RefMECA with coefficients equal to WA and WB are resolved with a Cramer cell (27), and
- variable solutions equal to RefCA and RefCB are produced.

3. Method as claimed in either of claims 1 and 2,
**characterized in that**, in order to produce the electrical reference signal RefELEC,

- a voltage signal V is measured at the terminals of the storage device,
- the difference between this measured voltage signal V and a setpoint signal Vref is calculated and an error signal EV is obtained,
- this error signal EV is applied as input to a correcting cell (40), and
- the electrical reference signal RefELEC is produced with the aid of this correcting cell (40).

4. Method according to Claim 3, **characterized in that** the correcting cell (40) is of the proportional integral type.

5. Method according to one of Claims 1 to 4,
**characterized in that**

- the setpoint signals RefCA and RefCB are transmitted via transmitter device (12, 13), and
- the transmitter device (12, 13) are interconnected by an electrical connection (14).

6. Method according to Claim 5, **characterized in that**

- a low-capacity energy storage device (21) is placed on the electrical connection (14).

7. Method according to Claim 6, **characterized in that**

- the low-capacity energy storage device (21) is a capacitor.

8. Method according to one of Claims 5 to 7,
**characterized in that**

- the transmitter device (12, 13) are inverters and the electrical connection (14) is a direct voltage bus.

**Patentansprüche**

1. Steuerungsverfahren für eine Vorrichtung (1) zur Kraftübertragung zwischen einer Welle (2) einer Wärmekraftmaschine (3) und einer Achswelle (4) von Rädern (5), wobei bei diesem Verfahren eingesetzt werden:

   - zwei elektrische Maschinen (6, 7), wobei eine erste Maschine (6) eine Wellendrehzahl WA und ein Drehmoment CA besitzt und eine zweite Maschine (7) eine Wellendrehzahl WB und ein Drehmoment CB besitzt,
   - eine mechanische Baugruppe (10), welche die Achswelle (4) der Räder (5), die Welle (2) der Kraftmaschine (3) und die Wellen (8, 9) der zwei elektrischen Maschinen (6, 7) miteinander verbindet,
   - eine Verbindungsvorrichtung (11), welche eine direkte Überleitung einer elektrischen Leistung zwischen den zwei Maschinen (6, 7) sicherstellt,
   - wobei die Verbindungsvorrichtung (11) eine Regelungsvorrichtung (27) aufweist, welche Sollwertsignale RefCA und RefCB erzeugt, die dazu bestimmt sind, dass die zwei Maschinen (6, 7) ihnen folgen, und wobei
   - ein elektrisches Referenzsignal RefELEC erzeugt wird, welches CA*WA+CB*WB entspricht, und dieses an einen ersten Eingang der Regelungsvorrichtung (27) angelegt wird,
   - ein mechanisches Referenzsignal RefMECA erzeugt wird, welches CA*WB-CB*WA entspricht, und dieses an einen zweiten Eingang der Regelungsvorrichtung (27) angelegt wird,

   **dadurch gekennzeichnet, dass**, um das mechanische Referenzsignal RefMECA zu erzeugen:

   - ein Referenzsignal refC1 erzeugt wird, welches dem Drehmoment entspricht, das an der Welle (2) der Kraftmaschine (3) nach einem auf dieser Welle (2) angebrachten Schwungrad (3.1) erwartet wird,
   - durch Simulation ein Referenzsignal refC2 erzeugt wird, welches dem Drehmoment entspricht, das an der Achswelle (4) der Räder (5) erwartet wird, und
   - das Referenzsignal refC1 und das Referenzsignal refC2 an Eingänge einer Auflösungszelle (47) mit einer Übertragungsfunktion angelegt werden, welche deterministischen Übertragungsgleichungen der Übertragungsvorrichtung (1) entspricht,
   - mit Hilfe dieser Auflösungszelle (47) die Zwischen-Referenzsignale Ref1CA und Ref1CB erzeugt werden,
   - die Zwischen-Referenzsignale Ref1CA und Ref1CB an Eingänge einer Kombinationszelle (56) angelegt werden, welche eine Linearkombination der Werte der Signale realisiert, welche am Eingang an sie angelegt werden, und
   - am Ausgang dieser Kombinationszelle (56) das Signal RefMECA erzeugt wird, und
   - mit der Regelungsvorrichtung (27) die Sollwertsignale RefCA und RefCB durch Linearkombination des elektrischen Referenzsignals RefELEC und des mechanischen Referenzsignals RefMECA erzeugt werden.

2. Verfahren nach Anspruch 1, **dadurch gekennzeichnet, dass**, um die Sollwertsignale RefCA und RefCB zu erzeugen,

   - mit einer Cramer-Zelle (27) zwei Gleichungen gelöst werden, die gleich RefELEC bzw. RefMECA sind, mit Koeffizienten, die gleich WA und WB sind, und
   - Lösungsvariable erzeugt werden, die gleich RefCA und RefCB sind.

3. Verfahren nach einem der Ansprüche 1 oder 2, **dadurch gekennzeichnet, dass**, um das elektrische Referenzsignal RefELEC zu erzeugen,

   - ein Spannungssignal V an den Klemmen der Speichervorrichtung gemessen wird,
   - die Differenz zwischen diesem gemessenen Spannungssignal V und einem Sollwertsignal Vref gebildet wird und ein Fehlersignal EV erhalten wird,
   - dieses Fehlersignal EV an den Eingang einer Korrekturzelle (40) angelegt wird, und
   - mit Hilfe dieser Korrekturzelle (40) das elektrische Referenzsignal RefELEC erzeugt wird.

4. Verfahren nach Anspruch 3, **dadurch gekennzeichnet, dass** die Korrekturzelle (40) vom Proportional-Integral-Typ ist.

5. Verfahren nach einem der Ansprüche 1 bis 4, **dadurch gekennzeichnet, dass**

   - die Sollwertsignale RefCA und RefCB durch Überträgervorrichtungen (12, 13) übertragen werden, und
   - die Überträgervorrichtungen (12, 13) durch eine elektrische Verbindung (14) miteinander verbunden werden.

6. Verfahren nach Anspruch 5, **dadurch gekennzeichnet, dass**

   - in der elektrischen Verbindung (14) eine Energiespeichervorrichtung (21) von geringer Kapazität angeordnet wird.

7. Verfahren nach Anspruch 6, **dadurch gekennzeichnet, dass**

   - die Energiespeichervorrichtung (21) von geringer Kapazität ein Kondensator ist.

8. Verfahren nach einem der Ansprüche 5 bis 7, **dadurch gekennzeichnet, dass**

   - die Überträgervorrichtungen (12, 13) Wechselrichter sind und die elektrische Verbindung (14) ein Gleichspannungsbus ist.

**Fig. 1**

**Fig. 2**

RefMECA=CA.WB-CB.WA

RefELEC1=CA.WA+CB.WB

RefELEC2=CA.WA+CB.WB

**Fig. 4**

**Fig. 3**

**EP 1 791 712 B1**

**Documents brevets cités dans la description**

- FR 2832357 A
- EP 1174304 A
- FR 2847858 A